# EUROPÄISCHE PATENTSCHRIFT

(11) **EP 1 015 131 B1**
(45) Veröffentlichungstag und Bekanntmachung des Hinweises auf die Patenterteilung: **02.05.2003**
(21) Anmeldenummer: 98945247.9
(22) Anmeldetag: 17.08.1998
(51) Int. Cl.: B05D 1/00

(54) **VERFAHREN ZUR HERSTELLUNG VON MEHRSCHICHTLACKIERUNGEN**
METHOD FOR PRODUCING MULTI-LAYER PAINTS
PROCEDE DE PRODUCTION DES PEINTURES MULTICOUCHE

(30) Priorität: 20.08.1997 DE 19736083
(43) Veröffentlichungstag der Anmeldung: 05.07.2000
(73) Patentinhaber: BASF Coatings Aktiengesellschaft, 48165 Münster (DE)
(72) Erfinder: MEISENBURG, Uwe, D-47051 Duisburg (DE); JOOST, Karl-Heinz, D-53842 Troisdorf (DE); HESSELMAIER, Andrea, D-48317 Drensteinfurt (DE); RING, Heinz-Peter, D-48153 Münster (DE); SCHWALM,Reinhold, D-67157 Wachenheim (DE); BECK,Erich, D-68526 Ladenburg (DE); KÖNIGER, Rainer, 67251 Freinsheim (DE)
(74) Vertreter: Fitzner, Uwe, Dr.
(86) Internationale Anmeldenummer: EP9805180
(87) Internationale Veröffentlichungsnummer: WO99008802

(56) Entgegenhaltungen:
- EP-A- 0 540 884
- DE-C- 19 709 560
- US-A- 4 675 234

## Beschreibung

Gegenstand der vorliegenden Erfindung ist ein Verfahren zur Herstellung von Mehrschichtlackierungen sowie deren Verwendung.

### Stand der Technik

In den vergangenen Jahren wurden bei der Entwicklung säure- und etchbeständiger Klarlacke für die Automobilserienlackierung große Fortschritte erzielt. In neuerer Zeit besteht nun vermehrt der Wunsch der Automobilindustrie nach kratzfesten Klarlacken, die gleichzeitig in den übrigen Eigenschaften das bisherige Eigenschaftsniveau beibehalten.

So ist aus der EP-A-540 884 ein Verfahren zur Herstellung von Mehrschichtlackierungen insbesondere auf dem Kraftfahrzeugsektor unter Verwendung von radikalisch und/oder kationisch polymerisierbaren, silikonhaltigen Klarlacken bekannt, bei dem die Applikation des Klarlacks bei einer Beleuchtung mit Licht einer Wellenlänge von über 500 nm oder unter Ausschluß von Licht erfolgt und bei dem anschließend die Klarlackschicht mittels energiereicher Strahlen gehärtet wird. Die so erhaltenen Oberflächen sollen ein gutes optisches Verhalten und eine gute Kratzbeständigkeit aufweisen.

Ebenso ist aus der EP-A-568 967 ein Verfahren zur Herstellung von Mehrschichtlackierungen insbesondere auf dem Kraftfahrzeugsektor unter Verwendung von strahlenhärtbaren Klarlacken bekannt.

Rein strahlenhärtbare Beschichtungen sind auch aus der US 4,675,234 bekannt.

Aus der DE 44 21 558 ist weiterhin ein Beschichtungsverfahren bekannt, bei dem eine Grundierung mittels Strahlung teilvernetzt wird und anschließend ein strahlenhärtbarer Lack aufgetragen wird. Danach wird durch Elektrodenstrahlung eine Volivernetzung der Decklackschicht durchgeführt. Für die zusätzliche und endgültige Härtung des Lacks wird darüber hinaus ein abschließendes Erwärmen der Lackschicht empfohlen.

Aus der US-PS 4,675,234 ist schließlich eine weitere mehrschichtige Lackierung bekannt. Bei dieser wird zunächst ein Basislack auf ein Substrat aufgetragen, mittels Strahlung teilvernetzt und auf diese teilvernetzte Schicht ein Decklack aufgetragen. Dieser Decklack wird zusammen mit der Basislackschicht einer Strahlenhärtung unterzogen.

In der DE 197 09 560 C1 wird ein Klarlacküberzugsmittel enthaltend eine thermisch und eine strahlenhärtbare Komponente beschrieben das auf einen beliebigen Basislack aufgetragen wird. Die Mehrschichtlackierung wird zuerst energiereiche Strahlung ausgesetzt und dann eingebrannt.

Die bisher eingesetzten Klarlacke haften nicht zufriedenstellend auf den Basislacken. Auch ist die Schmutzwasserbeständigkeit dieser Mehrschichtsysteme nicht genügend. Zudem dringen etwaig vorhandene Reaktivverdünner in die Basislackschicht ein, so daß diese teilweise gelöst wird. Die Folge ist eine ungenügend ausgehärtete Schichtung.

### Gegenstand der Erfindung

Der vorliegenden Erfindung liegt somit die Aufgabe zugrunde, ein Verfahren zur Herstellung eines mehrschichtigen Überzugs enthaltend wenigstens eine Basislackschicht und eine Decklackschicht zur Verfügung zu stellen, der die genannten Nachteile nicht aufweist. Insbesondere soll eine bessere Haftung der Basisschicht zum Untergrund und zur Decklackschicht erreicht werden.

Diese Aufgabe wird durch ein Verfahren zur Herstellung eines mehrschichtigen Überzugs enthaltend wenigstens eine Basislackschicht und eine Decklackschicht gelöst, dadurch gekennzeichnet,
A. zu einem Basislack unmittelbar vor der Applikation freies Polyisocyanat zugesetzt,
B. der Basislack, enthaltend eine strahlenhärtbare Komponente (I) auf der Basis von Polyurethanharzen, Polyacrylatharzen, Polyesterharzen und/oder Aminoplastharzen sowie deren Mischungen, auf ein Substrat aufgetragen wird, bei Temperaturen von unter 100 °C, vorzugsweise 60-80 °C bei einer thermischen Teilvemetzung oder Trocknung unterworfen und
C. auf diese Lackschicht ein Decklack aufgetragen und anschließend eine Strahlenhärtung durchgeführt wird.

### BASISLACK

Vorzugsweise werden wäßrige Basislacke eingesetzt. Sofern Lösemittel vorhanden sind, liegt deren Gehalt bevorzugt unter 15%. Wesentlich ist ferner, daß der Basislack sowohl strahlenhärtbar als auch bei Temperaturen unter 100°C ohne Bestrahlung wenigstens teilweise thermisch vernetzbar oder trocknend ist,

### Komponente (I)

Die Komponente I enthält Bindemittel, die bei Temperaturen von unter 100 °C, bevorzugt bei Temperaturen von 60°C-80°C, besonders bevorzugt ...., wenigstens teilweise vernetzend oder trocknend sind. Zusätzlich können die Bindemittel strahlenhärtbar sein. Die erfindungsgemäß eingesetzten Bindemittel weise dann vorzugsweise eine Doppelbindungsdichte von 0,05-10, bevorzugt 0,1-4, besonders bevorzugt von 0,5-2 mol/kg auf.

Der aromatische Anteil liegt vorzugsweise unter 5%. Der Aminstickstoffgehalt beträgt vorzugsweise weniger als 2%, besonders bevorzugt unter 1%.

Ebenso können nicht-strahlenhärtbare Bindemittel enthaltend strahlenhärtbare Komponenten mit coreaktiven Gruppen, z. B Isocyanaten, Epoxiden, Malaminen, Malonestern oder Anhydriden zum Einsatz kommen.

Ferner können in Komponente I strahlenhärtbare Oligomere vorhanden sein. Sofern die Bindemittel nicht strahlenhärtbar sind, müssen solche Oligomere zugesetzt werden.

Die Bindemittel werden in den erfindungsgemäßen Basislacken bevorzugt in einer Menge von 5 bis 90 Gew.-%, besonders bevorzugt von 20 bis 70 Gew.-%, jeweils bezogen auf das Gesamtgewicht des Decklacks im Falle von Klarlacken bzw. auf das Gewicht des Beschichtungsmittels ohne Pigmente und Füllstoffe im Falle pigmentierter Systeme, eingesetzt.

Als Bindemittel können wasserverdünnbare bzw. wasserdispergierbare und/oder in organischer Lösung darstellbare Polyurethanharze, Polyacrylatharze, Polyesterharze und Aminoplastharze sowie deren Mischungen eingesetzt werden.

Im folgenden werden die erfindungsgemäß einsetzbaren Bestandteile der Komponente I näher beschrieben:

### Polyurethane

Geeignet sind beispielsweise die in der Literatur für den Einsatz in Wasserbasislacken beschriebenen Polyurethanharze, insbesondere wenn diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze: EP-A-355433, DE-OS 3545618, DE-OS 3813866 sowie die deutsche Patentanmeldung DE 4005961.8.

Bevorzugt werden wasserverdünnbare Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g aufweisen und durch Umsetzung, vorzugsweise Kettenverlängerung, von Isocyanatgruppen aufweisenden Präpolymeren herstellbar sind. Solche Polyurethanharze sind beispielsweise in der europäischen Patentanmeldung 92904918. 7 beschrieben, auf die insoweit verwiesen wird.

Zu den bevorzugten Polyurethanen gehören carbamatfunktionelle Oligomere. Die erfindungsgemäß eingesetzten Polyurethane weisen vorzugsweise eine Doppelbindungsdichte von 0,05-10 ol/kg, bevorzugt 0,1-4 mol/kg, besonders bevorzugt 0,5-2 kg/mol auf.

### Polyacrylate

Die als Bindemittel eingesetzten Polyacrylatharze sind ebenfalls bekannt und beispielsweise in DE-OS 3832826 beschrieben. Geeignet sind allgemeinen wasserverdünnbare bzw. wasserdispergierbare Polyacrylatharze, die sich in Form organischer Lösungen darstellen lassen. Vorzugsweise handelt es sich um Polyacrylate enthaltend strahlenhärtbare Komponenten mit coreaktiven Gruppen, z. B. Isocyanaten, Epoxiden, Melaminen, Malonestern oder Anhydriden.

### Urethanacrylate

Urethan(meth)acrylate sind dem Fachmann wohl bekannt und brauchen daher nicht näher erläutert zu werden.

Die erfindungsgemäß einsetzbaren Polyurethanacrylate können erhalten werden durch Umsetzung eines Di- oder Polyisocyanates mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat oder Hydroxyalkylester anderer ethylenisch ungesättigter Carbonsäuren.

Die Mengen an Kettenverlängerungsmittel, Di-bzw. Polyisocyanat und Hydroxyalkylester werden dabei bevorzugt so gewählt, daß
1.) das Äquivalentverhältnis der NCO-Gruppen zu den reaktiven Gruppen des Kettenverlängerungsmittels (Hydroxyl-, Amino- bzw. Mercaptylgruppen) zwischen 3 : 1 und 1 : 2, bevorzugt bei 2 : 1, liegt und
2.) die OH-Gruppen der Hydroxialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Polyurethanacrylate herzustellen, indem zunächst ein Teil der Isocyanatgruppen eines Di- oder Polyisocyanates mit mindestens einem Hydroxyalkylester umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxyalkylester so gewählt, daß das Äquivalentverhältnis der NCO-Gruppen zu den reaktiven Gruppen des Kettenverlängerungsmittels zwischen 3 : 1 und 1 : 2, bevorzugt bei 2:1 liegt und das Äquivalentverhältnis der restlichen NCO-Gruppen zu den OH-Gruppen des Hydroxyalkylesters 1 : 1 beträgt. Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem Hydroxyalkylester und im Anschluß hieran können die restlichen Isocyanatgruppen mit einem Diamin umgesetzt werden.

Diese verschiedenen Herstellverfahren der Polyurethanacrylate sind bekannt (vgl. z.B. EP-A-204 161) und bedürfen daher keiner genaueren Beschreibung. Besonders bevorzugt sind aliphatische Urethan(meth)acrylate und alphatische (Meth)Acrylester.
Eine Flexibilisierung der Urethan(meth)acrylate ist beispielsweise dadurch möglich, daß entsprechende isocyanat-funktionelle Praepolymere bzw. Oligomere mit längerkettigen, aliphatischen Diolen und/oder Diaminen, insbesondere aliphatischen Diolen und/oder Diaminen mit mindestens 6 C-Atomen umgesetzt werden. Diese Flexibilisierungsreaktion kann dabei vor oder nach der Addition von Acryl- bzw. Methacrylsäure an die Oligomere bzw. Praepolymere durchgeführt werden.

Als Beispiele für geeignete Bindemittel seien auch die folgenden, im Handel erhältlichen Produkte genannt:
Urethanacrylat Crodamer UVU 300 der Firma Croda Resins Ltd., Kent, GB; aliphatisches Urethantriacrylat Genomer 4302 der Firma Rahn Chemie, CH; aliphatisches Urethandiacrylat Ebecryl 284 der Firma UCB, Drogenbos, Belgien; aliphatisches Urethantriacrylat Ebecryl 294 der Firma UCB, Drogenbos, Belgien; aliphatisches Urethantriacrylat Roskydal LS 2989 der Firma Bayer AG, Deutschland; aliphatisches Urethandiacrylat V94-504 der Firma Bayer AG, Deutschland; aliphatisches hexafunktionelles Urethanacrylat Viaktin VTE 6160 der Firma Vianova, Österreich; aliphatisches Urethandiacrylat Laromer 8861 der Firma BASF AG sowie davon abgewandelte Versuchsprodukte, wie z.B. Urethanacrylatdispersion Laromer 8949 der Firma. BASF AG, Viaktin 6155 der Firma Vianova.

### Polyester

Als Bindemittel sind auch wasserverdünnbare bzw. wasserdispergierbare und in Form organischer Lösungen darstellbare Polyesterharze verwendbar. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

### Aminoplastharze

Als Bindemittel sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll- von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können selbstverständlich auch Mischungen der genannten Bindemittel sowie zusätzlich oder alleine andere wasserverdünnbare bzw. wasserdispergierbare Bindemittel eingesetzt werden.

### Strahlenhärtbare Komponenten

Die erfindungsgemäßen Basislacke können strahlenhärtbare Oligomere, wie Polyether, Polyester- und/oder Polyurethan(meth)acrylate und deren Dispersionen enthalten. Bevorzugt sind Anteile von 5 bis 90 Gew.-%, bevorzugt in mittels UV-Strahlen gehärteten Zubereitungen 10 bis 80 Gew.-%, bezogen auf das Gewicht des Beschichtungsmittels ohne Pigmente und Füllstoffe.
Solche Oligomere müssen zugesetzt werden, sofern die in der Komponente I vorhandenen Bindemittel nicht strahlenhärtbar sind.

Ein erfindungsgemäß bevorzugtes Bindemittelsystem für die Komponente I enthält vorzugsweise Urethan(meth)acrylate. Besonders bevorzugt sind aliphatische Urethan(meth)acrylate und aliphatische (Meth)acrylester. Vorzugsweise beträgt die Doppelbindungsdichte 0,05-10, bevorzugt 0,1-14, besonders bevorzugt 0,05-2 mol/kg.

Ein erfindungsgemäß bevorzugtes Bindemittelsystem enthält aliphatische Urethandispersionen und nicht strahlenhärtbare Bindemittel, vorzugsweise Polyacrylate, enthaltend strahlenhärtbare Komponenten mit coreaktiven Gruppen, z. B. Isocyanate, Epoxiden, Melaminen, Malonestern oder Anhydriden.

Der aromatischen Anteil liegt hierbei vorzugsweise unter 5%. Der Amin-Stickstoffgehalt liegt vorzugsweise unter 2%; besonders bevorzugt unter 1%.

Übliche, in strahlenhärtbaren Systemen eingesetzte Photoinitiatoren, beispielsweise Benzophenone, Benzione oder Benzoinether, bevorzugt Hydroxyacrylketone und (Bis)acylphosphinoxide können ebenfalls verwendet werden. Es können auch beispielsweise die im Handel unter den Namen Irgacure^{R} 184, Irgacure^{R} 1800 und Irgacure^{R} 500 der Fa. Ciba Additive, Genocure^{R} MBF der Fa. Rahn und Lucirin^{R} TPO der Fa. BASF AG erhältlichen Produkte eingesetzt werden.
Bei Verwendung der kationischen UV-Härtung können Epoxisysteme, wie z.B. Cyracure 6110 (Union Carbide) und die entsprechenden Photoinitiatoren, z.B. Cyracure 6990, zum Einsatz kommen.

### Weitere Zusatzstoffe

Im einzelnen kann der Basislack ferner UV-Absorber, vorzugsweise Triazinverbindungen, und Radikalfänger enthalten. Er kann ferner Rheologiemittel sowie sonstige Lackhilfsstoffe aufweisen. Selbstverständlich können auch Pigmente jeglicher Art, beispielsweise Farbpigmente wie Azopigmente, Phtalocyaninpigmente, Carbonylpigmente, Dioxazinpigmente, Titandioxid, Farbruß, Eisenoxide und Chrom- bzw. Kobaldoxide, oder Effektpigmente wie Metallplättchenpigmente, insbesondere Aluminiumplättchenpigmente und Perlglanzpigmente eingebaut sein und/oder flüssigkristalline Polymere.

Weiterhin können die erfindungsgemäß eingesetzten Basislacke ggfs. noch übliche Hilfsmittel, Additive, geeignete Lichtschutzmittel (z.B. HALS-Verbindungen, Benztriazole, Oxalanilid u.ä.), Slipadditive, Polymerisationsinhibitoren, Mattierungsmittel, Entschäumer, Verlaufsmittel und filmbildende Hilfsmittel, z.B. Cellulose-Derivate, oder andere, in Basislacken üblicherweise eingesetzten Additive enthalten. Diese üblichen Hilfsmittel und/oder Additive werden üblicherweise in einer Menge von bis zu 15 Gew.-%, bevorzugt 2 bis 9 Gew.-%, bezogen auf das Gewicht des Beschichtungsmittels ohne Pigmente und ohne Füllstoffe, eingesetzt.

### Komponente (II)

Ggf. kann vor der Applikation eine Komponente (II) enthaltend Vernetzungsmittel, vorzugsweise freie Isocyanate oder eine Mischung aus freien Polyisocyanaten, höchst bevorzugt niedrigviskose. Polyisocyanate zugesetzt werden. So können als Vernetzungsmittel mindestens ein gegebenfalls in einem oder mehreren organischen, gegebenenfalls wasserverdünnbaren Lösemitteln gelöstes oder dispergiertes, nichtblockiertes Di- und/oder Polyisocyanat vorhanden sein.

Bei dem freien Polyisocyanatbestandteil handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPa.s (bei 23 Grad C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (A2) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind. Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Neben den genannten Vernetzungsmittel kommen erfindungsgemäß auch Tris(Alkoxycarbonylamino)Triazine der Formel 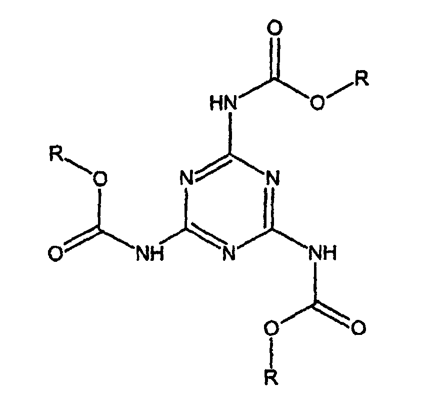 in Betracht, wobei R=Methyl, Butyl-Gruppen bedeuten. Ebenso können Derivate der genannten Verbindungen zum Einsatz kommen. Bevorzugt werden Tris(Alkoxycarbonylamino)Triazine eingesetzt, wie sie in der US-PS 5084541 beschrieben sind.

Die Carbamatgruppen reagieren bevorzugt mit OH-Trägern und zwar mit sterisch möglichst wenig gehinderten Hydroxylgruppen. Aminogruppen kann das Tris(Alkoxycarbonylamino)Triazin nicht vernetzen. Es kommt vielmehr zu einer Abspaltung der Carbalkoxygruppierung. Für die Trocknung oder Teilvernetzung bei Temperaturen von unter 100°C werden vorzugsweise geeignete Katalysatoren zugesetzt.

Zusätzlich den oben beschriebenen Isocyanaten können aber auch blockiertes Isocyanat oder eine Mischung aus blockierten Polyisocyanaten in der Komponente (II) enthalten sein. Hierfür kommen u.a. die oben im Zusammenhang mit der Komponente (I) beschriebenen Verbindungen in Betracht.

Eine bevorzugte Ausführungsform der Erfindung ist dadurch gekennzeichnet, die Mengen der Vernetzungsmittel 5-30 Teile, vorzugsweise 20 Teile bezogen auf 100 Teile Bindemittel betragen fest auf fest.. Neben den genannten Vernetzungsmitteln können in der Komponente (I) und/oder (II) auch blockierte Vernetzungssysteme vorhanden sein.

Wenn blockiertes Isocyanat zugemischt ist, so ist es vorzugsweise so ausgebildet, daß es sowohl mit einem Blockierungsmittel (Z1) als auch mit einem Blockierungsmittel (Z2) blockierte Isocyanatgruppen enthält, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierüngsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Für Trocknung bzw. Teilvemetzung bei Temperaturen von 100 °C erfolgt der Einsatz dieser blockierten Isocyanaten unter Zusatz geeigneter Katalysatoren.

Das blockierte Isocyanat wird vorzugsweise wie folgt hergestellt. Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierunqsmittel (Z1) und (Z2) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern. Es gefunden, da8 auch dann Lacke mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder das als Bestandteil (1) einsetzbare hydroxylgruppenhaltige Bindemittel eingesetzt. Ein geeignetes blockiertes Polyisocyanat ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besondere bevorzugt zwischen 7,5 : 2,5 und 6,5 : 3,5 liegt. Prinzipiell können alle auf dem Lackgebiet einsetzbaren Polyisocyanate zur Herstellung des blockierten Polyisocyanats eingesetzt werden. Es ist jedoch bevorzugt, Polyisocyanate einzusetzen, deren Isocyanatgruppen an aliphatische oder cycloaiiphatische Reste gebunden sind. Beispiele für derartige Polyisocyanate sind Hexamethylendiisocyanat, Isophorondiisocyanat, Trimethylhexamethylendiisocyanat, Dicyclohexylmethan- diisocyanat und 1,3-Bis-(2-isocyanatopropyl-2-)benzol (TMXDI) sowie Addukte dieser Polyisocyanate an Polyole, insbesondere niedermolekulare Polyole, wie z.B. Trimethylolpropan und von diesen Polyisocyanaten abgeleitete isocyanuratgruppen-und/oder biuretgruppenhaltige Polylsocyanate. Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Aquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt. Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylestar, wobei Malonsäurediethylester bevorzugt eingesetzt wird. Als Blockierungsmittel (Z2) werden von (Z1) verschiedene, aktive Methylengruppen enthaltende Blockierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl-, ethyl-, -propyl-, butyl-, -pentyl-, hexyl -, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsrnittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

### Herstellung

Die Herstellung der beiden Komponenten (I) und (II) erfolgt nach den üblichen Methoden aus den einzelnen Bestandteilen unter Rühren. Die Herstellung des Basislacks aus den einzelnen Komponenten (I) und (II) erfolgt ebenfalls mittels Rühren bzw. Dispersion unter Verwendung der üblicherweise eingesetzten Vorrichtungen, beispielsweise mittels Dissolver o.ä. oder mittels ebenfalls üblicherweise eingesetzter 2-Komponenten-Dosier- und -mischanlagen oder mittels des in der DE-A-195 10 651, Seite 2, Zeile 62, bis Seite 4, Zeile 5, beschriebenen Verfahrens zur Herstellung wäßriger 2-K-Polyurethanlacke.

Die Komponenten, insbesondere die Komponente (I), können als nichtwäßrige (i.e. mit organischen Lösungsmitteln) oder als wäßrige Komponenten formuliert sein. Im Falle einer nichtwäßrigen Formulierung können die in der Lackherstellung üblichen organischen Lösungsmittel Verwendung finden. Mittels wäßriger Komponenten werden wäßrige Beschichtungsmittel nach Mischung der Komponenten (I) und (II) erhalten. Ist ein wäßriges Beschichtungsmittel gewünscht, so können die Komponenten (I) und/oder (II) aber auch weitgehend wasserfrei und weitgehend frei von organischen Lösungsmitteln, jedoch als in Wasser dispergierbar formuliert sein. Dann wird das wäßrige Beschichtungsmittel durch Mischung der Komponenten und Zugabe von Wasser erhalten. Eine in Wasser dispergierbare bzw. lösbare Komponente (I) ist auf übliche Weise formulierbar, indem beispielsweise saure Gruppen in das Bindemittel eingebracht werden, welche dann mit einer üblichen Base, beispielsweise Ammoniak oder einem organischen Amin wie Triethylamin neutralisiert werden. Die Lösung bzw. Dispersion einer in Wasser dispergierbaren Komponente (I) und/oder (II) in Wasser erfolgt auf übliche Weise z.B. durch starkes Rühren ggf. unter leichter Erwärmung. Alternativ kann eine Lösung bzw. Dispersion in Wasser mittels nicht-ionischer Emulgatoren erfolgen. Insofern wird ebenfalls auf Standardvesfahren der Herstellung wäßriger Lacke verwiesen.

### Verwendung

Die erfindungsgemäßen Basislacke sind zur unmittelbaren Beschichtung eines Substrats geeignet. Dabei werden ggfs. die Komponente (I) und die Komponente (II) vor der Applikation, vorzugsweise unmittelbar vor der Applikation, zu dem Beschichtungsmittel miteinander vermischt, appliziert und für 5-30 min., vorzugsweise 10 min. bei unter 100 °C, vorzugsweise 60-80 °C getrocknet. Die Komponente (I) und die Komponente (II) können ggf. mit Hilfe einer speziellen Zweikomponenten-Applikationseinrichtung appliziert, zusammen getrocknet und gehärtet werden.

Mit den unter Verwendung des erfindungsgemäßen Komponentensystems hergestellten wäßrigen Lacken können auf Glas und die unterschiedlichsten Metallsubstrate, wie z.B. Aluminium, Stahl, verschiedene Eisenlegierungen u.ä., aufgebracht werden. Ebenso können grundierte oder nicht grundierte Kunststoffe wie z. B. ABS, AMMA, ASA, CA, CAB, EP, UF, CF, MF, MPF, PF, PAN, PA, PC, PE, HDPE, LDPE, LLDPE,UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden.

Die zu lackierenden Kunststoffe können selbstverständlich auch Polymerblends, modifizierte Kunststoffe oder faserverstärkte Kunststoffe sein. Bevorzugt werden die erfindungsgemäßen Beschichtungsmittel zur Beschichtung von z.B., Polycarbonat-Blends und Polypropylen-Blends eingesetzt. Insbesondere kommen die erfindungsgemäßen Beschichtungsmittel für die üblicherweise im Fahrzeugbau, insbesondere Kraftfahrzeugbau, eingesetzten Kunststoffe zum Einsatz.

Im Falle von nichtfunktionalisierten und/oder unpolaren Substratoberflächen sollten diese vor der Beschichtung einer Vorbehandlung, wie Plasma oder Beflammen, unterzogen werden.

Als Grundierung kommen dabei alle üblichen Grundierungen, und zwar sowohl konventionelle als auch wäßrige Grundierungen in Betracht. Selbstverständlich können auch strahlenhärtbare konverntionelle sowie strahlenhärtbare wäßrige Grundierungen eingesetzt werden.

Schließlich können die Beschichtungsmittel auch auf andere Substrate, wie beispielsweise Metall, Holz oder Papier, appliziert werden. Die Applikation erfolgt mit Hilfe üblicher Methoden, beispielsweise Spritzen, Gießen, Rakeln, Tauchen oder Streichen.

Aufgrund der genannten erfindungsgemäßen Verwendungen des Komponentensystems fallen auch damit hergestellte Bindemittel bzw. Lacke, sowie mit diesen Bindemitteln bzw. Lacken beschichtete Gegenstände unter die Erfindung.

Die erfindungsgemäßen Beschichtungsmittel werden üblicherweise bei Temperaturen von unter 100 °C, bevorzugt bei Temperaturen von 60-80° C getrocknet. Die Aushärtung des Basislacks erfolgt anschließend mit Strahlung, vorzugsweise UV-Licht oder Elektronenstrahlung. Ggf. kann die Strahlenhärtung auch erst nach dem Auftrag einer Decklackschicht erfolgen.

Der beschriebene Basislack zeichnet sich durch überraschend verbesserte Eigenschaften aus, insbesondere eine bessere Haftung der Lackschicht auf den beschichteten Substraten. Ebenso haften auf der Basislackschicht aufgetragenen Lackschichten besser. Sofern Reaktivverdünner in der nächsten Lackschicht vorhanden sind, vermögen diese überraschend den Basislack nicht anzulösen. Zudem weist der Basislack im Falle der Beschichtung mit Decklack eine bessere Schwitzwasserbeständigkeit auf. Ferner ist das Anquellen des Basisschicht reduziert. Außerdem sind die Farbbrillianz und Farbeffekte verbessert.

### DECKLACK

Auf die Basislackschicht wird erfindungsgemäß eine strahlenhärtbare Decklackschicht aufgetragen. Vorzugsweise handelt es sich hierbei um Klarlack. Eine hierfür bevorzugt einsetzbare Zusammensetzung wird im folgenden näher erläutert.

Der Festkörpergehalt des Decklacks liegt bei...., vorzugsweise..... Vorzugsweise werden wasserverdünnbare Bindemittel eingesetzt. Sofern Lösemittel vorhanden sind, liegt deren Gehalt unter 15%, vorzugsweise....

Diese wird so ausgewählt wird, daß der ausgehärtete Decklack im gummielastischen Bereich ein Speichermodul E' von mindestens 10^{7,6} Pa, bevorzugt von mindestens 10^{8,0} Pa, besonders bevorzugt von mindestens 10^{8,3} Pa, und einen Verlustfaktor bei 20 °C von maximal 0,10, bevorzugt von maximal 0,06, aufweist, wobei das Speichermodul E' und der Verlustfaktor tanδ mit der Dynamisch-Mechanischen Thermo-Analyse an homogenen freien Filmen mit einer Schichtdicke von 40 ± 10 µ m gemessen worden sind. Der Verlustfaktor tanδ ist dabei definiert ist als der Quotient aus dem Verlustmodul E" und dem Speichermodul E'.

Die dynamisch-mechanische Thermo-Analyse ist eine allgemein bekannte Meßmethode zur Bestimmung der viskoelastischen Eigenschaften von Beschichtungen urid beispielsweise beschrieben in Murayama, T., Dynamic Mechanical Analysis of Polymeric Material, Esevier, New York, 1978 und Loren W. Hill, Journal of Coatings Technology, Vol. 64, No. 808, May 1992, Seiten 31 bis 33.

Die Durchführung der Messungen kann beispielsweise mit den Geräten MK II, MK III oder MK IV der Firma Rheometrics Scientific erfolgen.

Die beschriebenen strahlenhärtbaren Decklacke mit den entsprechenden o. g. viskoelastischen Eigenschaften sind bevorzugt mittels UV- oder Elektronen-Strahlung, insbesondere mittels UV-Strahlung, härtbar. Daneben sind auch auch beispielsweise Decklacke auf Basis von Ormoceren u.a. geeignet.

Diese strahlenhärtbaren Decklacke enthalten üblicherweise mindestens ein, bevorzugt mehrere strahlenhärtbare Bindemittel, insbesondere auf Basis ethylenisch ungesättigter Prepolymerer und/oder ethylenisch ungesättigter Oligomerer, ggf. einen oder mehrere Reaktivverdünner, ggf. einen oder mehrere Photoinitiatoren sowie ggf. übliche Hilfs- und Zusatzstoffe.

Bevorzugt werden strahlenhärtbare Beschichtungsmittel eingesetzt, deren Viskosität bei 23 °C kleiner als 100 s Auslaufzeit im DIN 4 Becher, besonders bevorzugt kleiner 80 s Auslaufzeit im DIN 4 Becher beträgt.

### Bindemittel

Als Bindemittel kommen in diesen strahlenhärtbaren Beschichtungsmitteln beispielsweise (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate zum Einsatz. Bevorzugt werden Bindemittel eingesetzt, die frei von aromatischen Struktureinheiten sind. Die Verwendung von Epoxyacrylaten führt zwar zu harten, kratzbeständigen Beschichtungen, die aber im allgemeinen eine verbesserungsbedürftige Witterungsbeständigkeit zeigen. Bevorzugt werden daher Urethan(meth)acrylate und/oder Polyester(meth)acrylate, besonders bevorzugt aliphatische Urethanacrylate, eingesetzt.
Bevorzugt werden außerdem im wesentlichen silikonfreie, besonders bevorzugt silikonfreie Bindemittel eingesetzt, da die resultierenden Decklacke eine gegenüber silikonhaltigen Decklacken verbesserte Überlackierbarkeit insbesondere bei Reparaturen aufweisen.

Die als Bindemittel eingesetzten Polymere bzw. Oligomere weisen üblicherweise ein zahlenmittleres Molekulargewicht von 500 bis 50.000, bevorzugt von 1.000 bis 5.000, auf.

Bevorzugt werden in den erfindungsgemäßen Decklacke Polymere und/oder Oligomere eingesetzt, die pro Molekül mindestens 2, besonders bevorzugt 3 bis 6 Doppelbindungen aufweisen. Bevorzugt weisen die verwendeten Bindemittel außerdem ein Doppelbindungsäquivalentgewicht von 400 bis 2.000, besonders bevorzugt von 500 bis 900, auf. Außerdem weisen die Bindemittel bei 23 °C bevorzugt eine Viskosität von 250 bis 11.000 mPa.s auf.

### Polyesteracrylate

Polyester(meth)acrylate sind dem Fachmann prinzipiell bekannt. Sie sind durch verschiedene Methoden herstellbar. Beispielsweise kann Acrylsäure und/oder Methacrylsäure direkt als Säurekomponente beim Aufbau der Polyester eingesetzt werden. Daneben besteht die Möglichkeit, Hydroxyalkylester der (Meth)Acrylsäure als Alkoholkomponente direkt beim Aufbau der Polyester einzusetzen. Bevorzugt werden die Polyester(meth)acrylate aber durch Acrylierung von Polyestern hergestellt.
Beispielsweise können zunächst hydroxylgruppenhaltige Polyester aufgebaut werden, die dann mit Acryl- oder Methacrylsäure umgesetzt werden. Es können auch zunächst carboxylgruppenhaltige Polyester aufgebaut werden, die dann mit einem Hydroxyalkylester der Acryl- oder Methacrylsäure umgesetzt werden. Nicht umgesetzte (Meth)Acrylsäure kann durch Auswaschen, Destillieren oder bevorzugt durch Umsetzen mit einer äquivalenten Menge einer Mono- oder Diepoxidverbindung unter Verwendung geeigneter Katalysatoren, wie z.B. Triphenylphosphin, aus dem Reaktionsgemisch entfernt werden. Bezüglich weiterer Einzelheiten zur Herstellung der Polyesteracrylate sei insbesondere auf die DE-OS 33 16 593 und die DE-OS 38 36 370 sowie auch auf die EP-A-54 105, die DE-AS 20 03 579 und die EP-B-2866 verwiesen.

### Polyetheracrylate

Polyether(meth)acrylate sind dem Fachmann ebenfalls prinzipiell bekannt. Sie sind durch verschiedene Methoden herstellbar. Beispielsweise können hydroxylgruppenhaltige Polyether, die mit Acrylsäure und/oder Methacrylsäure verestert werden, durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten werden. Einsetzbar sind auch Polymerisationsprodukte des Tetrahydrofurans oder Butylenoxids.

Eine Flexibilisierung der Polyether(meth)acrylate und der Polyester(meth)acrylate ist beispielsweise dadurch möglich, daß entsprechende OH-funktionelle Praepolymere bzw. Oligomere (Polyetheroder Polyester-Basis) mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren, umgesetzt werden. Diese Flexibilisierungsreaktion kann dabei vor oder nach der Addition von Acryl- bzw. Methacrylsäure an die Oligomere bzw. Praepolymere durchgeführt werden.

### Epoxiacrylate

Ferner sind auch Epoxy(meth)acrylate dem Fachmann wohl bekannt und brauchen daher nicht näher erläutert zu werden. Sie werden üblicherweise hergestellt durch durch Anlagerung von Acrylsäure an Epoxidharze, beispielsweise an Epoxidharze auf Basis Bisphenol A oder andere handelsübliche Epoxidharze.

Eine Flexibilisierung der Epoxy(meth)acrylate ist beispielsweise analog dadurch möglich, daß entsprechende epoxy-funktionelle Praepolymere bzw. Oligomere mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren umgesetzt werden. Diese Flexibilisierungsreaktion kann dabei vor oder nach der Addition von Acryl- bzw. Methacrylsäure an die Oligomere bzw. Praepolymere durchgeführt werden.

Ferner sind die oben beschriebenen, in den Basislacken verwendeten Urethanacrylate auch für Decklacke einsetzbar.

### Reaktivverdünner

Die erfindungsgemäßen Decklacke können ggf. noch einen oder mehrere Reaktiwerdünner enthalten. Die Reaktiwerdünner können dabei ethylenisch ungesättigte Verbindungen sein. Die Reaktivverdünner können mono-, di- oder polyungesättigt sein. Sie dienen üblicherweise zur Beeinflußung der Viskosität und der lacktechnischen Eigenschaften, wie beispielsweise der Vernetzungsdichte.

Der bzw. die Reaktiwerdünner werden in den erfindungsgemäßen Decklacken bevorzugt in einer Menge von 0 bis 70 Gew.-%, besonders bevorzugt von 15 bis 65 Gew.-%, jeweils bezogen auf das Gesamtgewicht des Decklacks im Falle von Klarlacken bzw. auf das Gewicht des Decklacks ohne Pigmente und Füllstoffe im Falle pigmentierter Systeme, eingesetzt.

Als Reaktiwerdünner werden beispielsweise (Meth)Acrylsäure und deren Ester, Maleinsäure und deren Ester bzw. Halbester, Vinylacetat, Vinylether, Vinylharnstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerintri(meth)acrylat, Trimethylolpropantri(meth)acrylat, Trimethylolpropandi(meth)acrylat, Styrol, Vinyltoluol, Divinylbenzol, Pentaerythrittri(meth)acrylat, Pentaerythrittetra(meth)acrylat, Dipropylenglykoldi(meth)acrylat, Triprolylenglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, lsobomyl(meth)acrylat, Dimethylacrylamid und Dicyclopentylacrylat, die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,10-Decyl-diacrylat und 1,12-Dodecyl-diacrylat und das Umsetzungsprodukt von 2 Molen Acrylsäure mit einem Mol eines Dimerfettalkohols, der im allgemeinen 36 C-Atome aufweist. Geeignet sind auch Gemische der genannten Monomeren.

Bevorzugt werden als Reaktiwerdünner Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobornylacrylat, Hexandioldiacrylat und Tripropylenglykoldiacrylat eingesetzt.

### Strahlenhärtbare Komponenten

Die erfindungsgemäßen Decklacke enthalten bevorzugt in Anteilen von 0 bis 10 Gew.-%, bevorzugt in mittels UV Strahlen gehärteten Zubereitungen 2 bis 6 Gew.-%, bezogen auf das Gewicht des Beschichtungsmittels ohne Pigmente und Füllstoffe, übliche, in strahlenhärtbaren Beschichtungsmitteln eingesetzte Photoinitiatoren, beispielsweise Benzophenone, Benzoine oder Benzoinether, bevorzugt Hydroxiacrylketone und Bis(acyl)phosphinoxide in UV-Zubereitungen. Es können auch beispielsweise die im Handel unter den Namen Irgacure® 184, Irgacure® 1800 und Irgacure® 500 der Firma Ciba Geigy, Grenocure ® MBF der Firma Rahn und Lucirin® TPO der Firma BASF AG erhältlichen Produkte eingesetzt werden.

### Weitere Zusatzstoffe

Weiterhin enthalten die erfindungsgemäßen Decklacke gegebenenfalls noch übliche Hilfsmittel und/oder Additive, beispielsweise Lichtschutzmittel (z.B. HALS-Verbindungen, Benztriazole, Oxalanilid u.ä.), Slipadditive, Polymerisationsinhibitoren, Mattierungsmittel, Entschäumer, Verlaufsmittel und filmbildende Hilfsmittel, z.B. Cellulose-Derivate, oder andere, in Decklacken üblicherweise eingesetzten Additive. Diese üblichen Hilfsmittel und/oder Additive werden üblicherweise in einer Menge von bis zu 15 Gew.-%, bevorzugt 2 bis 9 Gew.-%, bezogen auf das Gewicht des Decklacks ohne Pigmente und ohne Füllstoffe, eingesetzt.

### Verwendung

Die erfindungsgemäßen Decklacke kommen insbesondere als Klartacke zum Einsatz, so daß sie üblicherweise keine oder nur transparente Füllstoffe und keine deckenden Pigmente enthalten. Es ist aber auch der Einsatz in Form von pigmentierten Decklacken möglich. In diesem Fall enthalten die Decklacke 2 bis 40 Gew.-%, bezogen auf das Gesamtgewicht des Decklacks, eines oder mehrerer Pigmente. Ferner können die Decklacke in diesem Fall noch 1 bis 20 Gew.-%, bezogen auf das Gesamtgewicht des Decklacks, eines oder mehrerer Füllstoffe enthalten.

Zur Herstellung von Beschichtungen werden die erfindungsgemäßen Decklacke auf mit erfindungsgemäßen Basislack beschichtete Substrate z.B. Metallbleche bzw. Metallbänder und Kunststoffe jeder Art appliziert.

Die Schichtdicken des Basislacks liegen erfindungsgemäß zwischen 5 und 100 µm, vorzugsweise 10 bis 50 µm, besonders bevorzugt 15 bis 30 µm.

Gegenstand der vorliegenden Erfindung ist daher auch ein Verfahren zur Herstellung von Mehrschichtlackierungen, bei dem
A. eine Komponente (I) enthaltend Bindemittel , die gegebenenfalls strahlenhärtbar sind, auf der Basis von Polyurethanharzen, Polyacrylatharzen und Aminoplastharzen sowie deren Mischungen und , vorzugsweise sofern das Bindemittel nicht strahlenhärtbar ist, eine strahlenhärtbare Komponente, vorzugsweise ein strahlenhärtbares Oligomer, ggfs. mit einer Komponente (II) enthaltend freies Polyisocyanat, gemischt, auf ein Substrat aufgetragen, bei Temperaturen von unter 100 °C, vorzugsweise 60-80 °C getrocknet, ggfs. einer Strahlenhärtung unterworfen und
B. auf diese Lackschicht ein Decklack aufgetragen und einer Strahlenhärtung unterworfen wird.

Die Härtung der Lackfilme erfolgt mittels Strahlung, bevorzugt mittels UV-Strahlung. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA Technology, Academic Press, London, United Kindom 1984) und bedürfen keiner weiteren Beschreibung.

Sofern vor der Applikation der Decklackschicht eine Strahlenhärtung der Basislackschicht unterblieben ist, kann dies nunmehr in einem Schritt gemeinsam mit der Härtung der Decklackschicht erfolgen.

Die erfindungsgemäßen mehrschichtigen Überzüge werden bevorzugt als Beschichtung im Bereich der Automobillackierung (Automobilserien- und Automobilreparaturlackierung) eingesetzt. Selbstverständlich können die Beschichtungsmittel neben der Applikation auf den unterschiedlichsten Metallen auch auf andere Substrate, wie beispielsweise Holz, Papier, Kunststoffe, mineralische Untergründe o.ä. appliziert werden. Sie sind ferner auch im Bereich der Beschichtung von Verpackungsbehältern sowie im Bereich der Beschichtung von Folien für die Mäbelindustrie, Fahrzeugteile u.ä. einsetzbar.

Insbesondere eignen sich die erfindungsgemäßen Mehrschichtlackierungen zum Einsatz im Bereich der Kraftfahrzeug-Serien- und/oder Kraftfahrzeug-Reparaturlackierung von Automobilkarossen und deren Teilen sowie Lkw-Aufbauten u.ä..

Nachfolgend wird die Erfindung anhand von Ausführungsbeispielen näher erläutert. Dabei bedeuten alle Teile Gewichtsteile, sofern nicht ausdrücklich etwas anderes angegeben wird.

### Rotvariationen für UV-Klarlackapplikationen

a) Imperialrot - Standard (zu beziehen über die BASF Coatings AG in Münster, Polyurethandispersion, die unter Temperatureinfluß mit Melaminkondensatharzen vernetzt)
b) Imperialrot - Standard + 7,5% Isocyanat bezogen auf das Gesamtgewicht (Basonat HI 100 zu beziehen über die BASF Coatings AG in Münster, 100% Festkörper, NCO-Gehalt 22,5% HDI-Trimer)
   a) + b) 10 Min bei 80°C vorgetrocknet
c) wie a), jedoch Polyurethanharz 1:1 gegen 30 Gew.-% (bezogen auf Gesamtlack) strahlenhärtbare Urethanacrylat-Dispersion (Laromer 8949, zu beziehen über die BASF AG, Polyurethandispersion mit freien Acrylatgruppen) ausgetauscht, UV-Initiator (Irgacure® 184 + Lucirin LR 8893) + 7,5% Isocyanat bezogen auf das Gesamtgewicht (Basonat HI 100 zu beziehen über die BASF AG, 100% Festkörper NCO-Gehalt 22,5% HDI-Trimer)
d) wie c), jedoch ohne Isocyanat
   c)+ d) 10 Min. bei 80°C vorgetrocknet + UV-Härtung bei 1500 mJ/cm²

UV-Klarlack wird in allen Beispielen eingesetzt:
⇒ Laromer 8861 (BASF AG, Urethandiacrylat 80%ig in Hexandioldiacrylat) Reaktivverdünner, Lichtschutzadditive (Tinuvin 400, Tinuvin 292 der Firma Ciba), Photoinitiator (Irgacure® 164 der Firma Ciba)
⇒ UV-Härtung

### Ergebnis:

a) vor Klarlack-Applikation: weich, nicht kratzfest
   nach Klarlack-Applikation: visuell in Ordnung, jedoch sehr weich, Gitterschnitt in Ordnung
   nach konstantem Klimawechseltest (40°C, 100% Luftfeuchtigkeit): Mattcracking, Gitterschnitt nicht in Ordnung
b) vor Klarlack-Applikation: nach 2 Tagen erst kratzfest
   nach Klarlack-Applikation: leichte Struktur, gut ausgehärtet, Gitterschnitt in Ordnung
   nach Klimawechseltest: Struktur, Erweichung, Gitterschnitt nicht in Ordnung
c) vor Klarlack-Applikation: kratzfest
   nach Klarlack-Applikation: visuell in Ordnung, Gitterschnitt in Ordnung
   nach Klimawechseltest: Gitterschnitt in Ordnung
d) vor Klarlack-Applikation: weich
   nach Klarlack-Applikation: visuell in Ordnung, sehr weich
   nach Klimawechseltest: völlige Unterwanderung mit H₂O

### Fazit:

Die Ansätze mit Isocyanat weisen eine deutlich bessere Schwitzwasserbeständigkeit auf.

| Rezeptur: | |
|---|---|
| Pastengemisch | 21,0 |
| Butylglykol | 13,0 |
| Verlaufsmittel | 1,0 |
| Vollentsalztes Wasser | 4,0 |
| Polyurethanacrylat | 57,5 |
| Irgacure 184 | 3,0 |
| Photoinitiator | 5,0 |
| Vollentsalztes Wasser (Polyisocyanatvernetzer) | 10,0 |

## Patentansprüche

1. Verfahren zur Herstellung eines mehrschichtigen Überzugs enthaltend wenigstens eine Basislackschicht und eine Decklackschicht, **dadurch gekennzeichnet**,
A. zu einem Basislack unmittelbar vor der Applikation freies Polyisocyanat zugesetzt,
B. der Basislack, enthaltend eine strahlenhärtbare Komponente (I) auf der Basis von Polyurethanharzen, Polyacrylatharzen, Polyesterharzen und/oder Aminoplastharzen sowie deren Mischungen, auf ein Substrat aufgetragen wird, bei Temperaturen von unter 100 °C, vorzugsweise 60-80 °C bei einer thermischen Teilvernetzung oder Trocknung unterworfen und
C. auf diese Lackschicht ein Decklack aufgetragen und anschließend eine Strahlenhärtung durchgeführt wird.

2. Verfahren zur Herstellung eines mehrschichtigen Überzugs nach Anspruch 1, **dadurch gekennzeichnet, daß** der Überzug ein strahlenhärtbares Oligomer enthält.

3. Verfahren zur Herstellung eines mehrschichtigen Überzugs nach einem der Ansprüche 1 oder 2, **dadurch gekennzeichnet, daß** die Bindemittel strahlenhärtbar sind.

4. Verfahren zur Herstellung eines mehrschichtigen Überzugs nach einem der Ansprüche 1 bis 3, **dadurch gekennzeichnet, daß** die Bindemittel eine Doppelbindungsdichte von 0,05-10, vorzugsweise 0,1-4 mol/kg aufweisen.

5. Verfahren zur Herstellung eines mehrschichtigen Überzugs nach einem der Ansprüche 1 bis 4, **dadurch gekennzeichnet, daß** er nicht strahlenhärtbare Bindemittel enthält, die coreaktive Gruppen aufweisen.

6. Verfahren zur Herstellung eines mehrschichtigen Überzugs nach Anspruch 5,**dadurch gekennzeichnet, daß** die coreaktiven Gruppen Isocyanate, Epoxide, Melamine, Malonester oder Anhydride sind.

7. Verfahren zur Herstellung eines mehrschichtigen Überzugs nach einem der Ansprüche 1 bis 7, **dadurch gekennzeichnet, daß** der Basislack wasserverdünnbare Bindemittel enthält.

8. Verfahren zur Herstellung eines mehrschichtigen Überzugs nach einem der Ansprüche 1 bis 8, **dadurch gekennzeichnet, daß** der Lösemittelgehalt unter 15% liegt.

9. Verfahren zur Herstellung eines mehrschichtigen Überzugs nach einem der Ansprüche 1 bis 9 **dadurch gekennzeichnet, daß** der Basis- und der Decklack mittels UV- oder Elektronen-Strahlung härtbar sind.

10. Verwendung des mehrschichtigen Überzugs nach einem der Ansprüche 1 bis 9 zur Herstellung von Mehrschichtlackierungen auf dem Kraftfahrzeugsektor.

## Claims

1. Process for producing a multilayer coating comprising at least one basecoat layer and one topcoat layer, **characterized in that** it comprises
A. adding free polyisocyanate to a basecoat directly prior to application,
B. applying the basecoat comprising a radiation-curable component (I) based on polyurethane resins, polyacrylate resins, polyester resins and/or amino resins and also mixtures thereof to a substrate and subjecting it to thermal partial crosslinking or drying at temperatures of less than 100°C, preferably 60-80°C, and
C. applying a topcoat to this coating layer, and subsequently carrying out radiation curing.

2. Process for producing a multilayer coating according to Claim 1, **characterized in that** the coating comprises a radiation-curable oligomer.

3. Process for producing a multilayer coating according to one of Claims 1 and 2, **characterized in that** the binders are radiation-curable.

4. Process for producing a multilayer coating according to one of Claims 1 to 3, **characterized in that** the binders have a double-bond density of 0.05-10, preferably 0.1-4 mol/kg.

5. Process for producing a multilayer coating according to one of Claims 1 to 4, **characterized in that** it comprises non-radiation-curable binders which have co-reactive groups.

6. Process for producing a multilayer coating according to Claim 5, **characterized in that** the co-reactive groups are isocyanates, epoxides, melamines, malonic esters or anhydrides.

7. Process for producing a multilayer coating according to one of Claims 1 to 6, **characterized in that** the basecoat comprises water-dilutable binders.

8. Process for producing a multilayer coating according to one of Claims 1 to 7, **characterized in that** the solvent content lies below 15%.

9. Process for producing a multilayer coating according to one of Claims 1 to 8, **characterized in that** the basecoat and the topcoat are curable by means of UV or electronic radiation.

10. Use of the multilayer coating according to one of Claims 1 to 9 for producing multilayer coating systems in the motor vehicle sector.

## Revendications

1. Procédé de préparation d'un revêtement multicouches contenant au moins une couche de laque de base et une couche de laque de recouvrement, **caractérisé en ce que**
A. un polyisocyanate libre est ajouté directement à une laque de base avant l'application,
B. la laque de base, contenant un composant (I) durcissable par irradiation, à base de résines polyuréthane, de résines polyacrylate, de résines polyester, et/ou de résines aminoplastes, ainsi que de leurs mélanges, est appliquée sur un substrat, est soumise à une réticulation partielle thermique ou un séchage à des températures inférieures à 100°C, de préférence de 60 à 80°C et
C. une laque de recouvrement est appliquée sur cette couche de laque, puis un durcissement par irradiation est effectué.

2. Procédé de préparation d'un revêtement multicouches selon la revendication 1, **caractérisé en ce que** le revêtement contient un oligomère durcissable par irradiation.

3. Procédé de préparation d'un revêtement multicouches selon l'une quelconque des revendications 1 ou 2, **caractérisé en ce que** les liants sont durcissables par irradiation.

4. Procédé de préparation d'un revêtement multicouches selon l'une quelconque des revendications 1 à 3, **caractérisé en ce que** les liants présentent une densité de doubles liaisons de 0,05 à 10, de préférence de 0,1 à 4 moles/kg.

5. Procédé de préparation d'un revêtement multicouches selon l'une quelconque des revendications 1 à 4, **caractérisé en ce qu'**il ne contient pas de liants durcissables par irradiation, qui présentent des groupes co-réactifs.

6. Procédé de préparation d'un revêtement multicouches selon la revendication 5, **caractérisé en ce que** les groupes co-réactifs sont les groupes isocyanate, époxyde, mélamine, ester malonique ou anhydride.

7. Procédé de préparation d'un revêtement multicouches selon l'une quelconque des revendications 1 à 7, **caractérisé en ce que** la laque de base contient des liants diluables à l'eau.

8. Procédé de préparation d'un revêtement multicouches selon l'une quelconque des revendications 1 à 8, **caractérisé en ce que** la teneur en solvants est inférieure à 15 %.

9. Procédé de préparation d'un revêtement multicouches selon l'une quelconque des revendications 1 à 9, **caractérisé en ce que** la laque de base et la laque de recouvrement sont durcissables au moyen d'un rayonnement UV ou d'électrons.

10. Utilisation du revêtement multicouches selon l'une quelconque des revendications 1 à 9, pour préparer des peintures multicouches dans le secteur automobile.
